# EUROPEAN PATENT SPECIFICATION

(11) **EP 0 518 140 B1**
(45) Date of publication and mention of the grant of the patent: **01.09.1999**
(21) Application number: 92109099.9
(22) Date of filing: 29.05.1992
(51) Int. Cl.: C08J 9/22, C08L 25/06

(54) **Process for producing foamable particles of styrenic polymers**
Verfahren zur Herstellung von expandierbaren Partikeln aus Styrolpolymer
Procédé de préparation de particules expansibles de polymères styréniques

(30) Priority: 31.05.1991 IT MI911502
(43) Date of publication of application: 16.12.1992
(73) Proprietor: ENICHEM S.p.A., 20124 Milano (IT)
(72) Inventor: Anfuso, Francesco, I-46100 Mantova (IT); Lanfredi, Roberto, I-46030 Virgilio (Mantova) (IT); Veroli, Gianfranco, I-46100 Mantova (IT); Borghi, Italo, I-44100 Ferrara (IT)
(74) Representative: Barz, Peter, Dr.

(56) References cited:
- DE-A- 2 553 299
- US-A- 4 226 942
- US-A- 4 599 366
- WORLD PATENTS INDEX LATEST Week 9011, Derwent Publications Ltd., London, GB; AN 90:080358
- WORLD PATENTS INDEX LATEST Week 9001, Derwent Publications Ltd., London, GB; AN 90:005279
- WORLD PATENTS INDEX Week 8044, 18 September 1980 Derwent Publications Ltd., London, GB; AN 80:77934C

## Description

The present invention relates to a process for producing foamable particles of styrenic polymers, endowed with improved processability and mechanical characteristics.

More particularly, the present invention relates to a process for producing foamable particles of styrenic polymers which are particularly suitable for producing, by moulding with relatively short residence times inside the mould, finished articles and blocks with an extremely good surface appearance, a low shrinkage and a high degree of sintering.

The production of foamable particles of styrenic polymers, in particular polystyrene, is well-known in the art. It comprises incorporating into the polymer, during the polymerization or thereafter, a foaming agent which boils at a temperature which is lower than the polymer softening temperature.

When the particles containing the foaming agent are heated, the latter evaporates and generates a large number of closed voids, viz., cells, in the polymer.

In order to produce low-density finished articles or blocks, these particles are charged into the void of a mould which defines the shape of the desired finished article, and are then heated to a temperature higher than the boiling point of the foaming agent and the softening point of the polymeric material. During this heating stage the particles are foamed and, owing to the limited room available, get sintered, forming a body having the shape and the dimensions of the void of the mould used.

The particles can directly be charged to the mould or they can be pre-foamed and, before being charged to the mould, they may be subjected to ageing, usually for approximately 15 to 30 hours.

After the moulding, the resulting shaped article is allowed to cool inside the mould for a suffidiently long period of time to prevent the moulded article from undergoing deformations after having been released from the mould.

Inasmuch as the foamed plastic material is a very good heat insulator, in order to cool the formed body, relatively long residence times inside the mould are required.

Therefore, the cooling time represents a substantial portion of the moulding cycle and enormously reduces the mould throughput per unit of time.

In order to reduce the residence time inside the mould, and to simultaneously obtain a satisfactory sinterization it has been proposed to add small amounts of halogenated organic compounds, such as bromo-, chloro- or chloro-bromo-derivatives to the styrenic polymer during polymerization thereof.

Some examples of these organic compounds, added to styrene during the polymerization step, are given in US-A-4 169 193; 4 172 928; and 4 200 696.

These organic compounds make it possible to reduce the residence time inside the mould to a considerable extent, but suffer from several drawbacks which limit the use thereof. A first drawback is due to the development of unpleasant smells during the pre-foaming step. Furthermore, after the moulding high shrinkage rates are observed wherefore moulded bodies with pre-determined dimensions cannot be obtained.

Furthermore, the use of halogenated organic products may cause toxicity problems when the material is used in food packaging applications. As is well-known, the various national legislations suggest that halogenated products should be eliminated from the formulations of foamable polystyrenes.

In EP-A-46494 coating the particles of styrenic polymers with a hydroxy carboxylic acid ester or a carboxylic acid ester of an alkoxy alcohol is proposed. Such a coating results in very short moulding times and a very satisfactory sinterability. Unfortunately, however, it displays the drawback that large amounts of additives have to be added to the particles in order to achieve acceptable results, with consequent problems of caking of the particles inside the containers and of pollution of process liquids during the moulding operation.

DE-A-2553299 discloses a process for the reduction of the blowing agent content of expandable polystyrene by heat treatment in a liquid phase.

US-A-4226942 relates to a process for the production of foamable resins wherein polystyrene beads are suspended in water, impregnated with n-pentane and subsequently separated and dried.

US-A-4599366 relates to a process for producing exapandable styrene polymer particles having antistatic and anti-lumping properties, which process comprises the coating of the surface of expandable styrene polymer particles with 0.1 to 0.4 wt.% of a specific quaternary ammonium salt.

JP-A-2034641 describes the preparation of foamable styrene resin particles containing 1-20 wt.% of a blowing agent, coated with 0.01-0.3 parts by weight of at least one selected from the group consisting of a non-ionic surface active agent, an oxyethyleneoxypropylene block copolymer and an organic compound in an oily state, at ordinary temperature, and 0.0001-0.3 parts by weight of a cationic surface active agent.

JP-A-01289841 relates to expanded styrene resin particles and their production, wherein the surface of the expandable styrene resin impregnated with a blowing agent is coated with at least one organic compound selected from among an organic compound which has a boiling point higher than that of the blowing agent and attacks the resin particles, for example, a non-ionic surfactant, polydimethylsiloxane and a liquid paraffin, and is exposed to a gaseous stream to evaporate the blowing agent present near the surface of said particles.

It has now been found that foamable particles of styrenic polymers, suitable for obtaining moulded articles which do not display the above-mentioned drawbacks, can be obtained by a process for producing improved foamable particles of styrene homopolymers and copolymers of styrene and other vinylic and/or vinylidenic monomers containing at least 50% by weight of chemically combined styrene (styrenic polymers), said process comprising:
(i) providing foamable particles of styrenic polymers containing incorporated therein from 2 to 20% by weight of foaming agent;
(ii) coating said particles with antistatic agent in an amount of not more than 1% by weight, based on the polymer, said antistatic agent consisting of an ethylene oxide/propylene oxide block copolymer with a content of ethylene oxide of from 10 to 50% by weight and an average molecular weight of from 1000 to 5000;
(iii)removing, before the pre-foaming, 5 to 60% by weight of the foaming agent initially present by treating the particles in an oven and at a temperature lower than the glass transition temperature of said particles.

Therefore, the present invention provides a process for producing foamable particles of styrenic polymers, suitable for producing, by moulding with a relatively short residence time inside the mould, shaped articles and blocks with an extremely good surface appearance and low shrinkage ratios.

The amount of foaming agent which is to be removed from the foamable particles is from 5 to 60% by weight; however, the best results, in particular as regards the degree of sintering, are obtained when the foaming agent loss ranges from 5 to 50% by weight, relative to the initial content of said foaming agent.

The removal of foaming agent is carried out by heating in an oven, at a temperature lower than the glass transition temperature (Tg) of the particles (styrenic polymer).

The residence time of the particles inside the oven is a function of the temperature and of the amount of foaming agent to be removed. In general, the temperature ranges from 25 to 60°C, preferably from 35 to 50°C, the residence time ranging from 10 minutes to 24 hours.

The particles containing incorporated therein the foaming agent may be produced by carrying out the polymerization -- preferably in aqueous suspension -- of styrene (either alone or in admixture with one or more ethylenically unsaturated comonomer(s) copolymerizable therewith) in the presence of one or more foaming agents.

The polymerization can be carried out in the presence of at least one peroxy initiator, or thermally according to any conventional process well known from the prior art.

According to an alternative route, the foaming agent may be incorporated in the finished styrenic polymer by exposing the particles of said polymer to the vapour of the foaming agent, or adding the latter to the already produced particles, suspended in water, or during an extrusion step. The various methods for producing foamable particles are well-known to those skilled in the art and are described in the technical literature. For exemplifying purposes, GB-A-695,826; 715,100; 886,811; 908,089; and 1,048,243 and US-A-2,983,692 may be mentioned in this context.

The terms "styrene polymers" and "styrenic polymers", as used in the instant specification and in the appended claims, encompass both styrene homopolymers and copolymers of styrene and other vinylic and/or vinylidenic monomers, which copolymers contain at least 50% by weight of chemically combined styrene.

Examples of such comonomers are α-methylstyrene; nucleus-halogenated styrene, such as 2,4-dichlorostyrene; acrylonitrile; methacrylonitrile; esters of α,β-unsaturated carboxylic acids with C₁-C₈ alcohols, such as (e.g. C₁-C₄ alkyl) esters of acrylic and/or methacrylic acid; and N-vinyl-compounds, such as N-vinyl-carbazole.

The terms "styrene polymers" and "styrenic polymers" also are to cover those copolymers which, besides styrene and possibly the above mentioned vinylic and/or vinylidenic comonomers, also contain small amounts (e.g. up to 10% b.w.) of monomers which contain two double bonds of the vinylic type, such as, e.g., divinylbenzene.

The foamable polystyrene particles usually contain, as foaming agents, the conventional easily volatile organic compounds which may be in gaseous or liquid form at room temperature and do not dissolve the polymer but cause it to foam, and the boiling point of which is lower than the softening point of the polymer.

Examples of particularly suitable foaming agents are aliphatic hydrocarbons of from 2 to 6 carbon atoms, such as propane, butane, n-pentane, isopentane, hexane, and cyclohexane, which may be used either as individual compounds or as mixtures thereof; petroleum ether; and halogenated derivatives of C₁-C₃ aliphatic hydrocarbons, such as the numerous chloro- and fluoro-derivatives of methane, ethane and ethylene (di-chloro-di-fluoro-methane, 1,2,2-trifluoro-ethane, 1,1,2-trichloro-ethane).

The foaming agent is used in an amount of from 2 to 20, preferably from 4 to 10% by weight, relative to the weight of the polymer.

The antistatic agents employable in the process according to the present invention are ethylene oxide/propylene oxide block copolymers which are generally proposed for use in order to improve the surface properties of free flowability, finishing and processability of particles of styrenic polymers.

These antistatic agents are well-known and are described in the technical literature; for exemplifying purposes, K. Johnson, "Antistatic Compositions for Textiles and Plastics", Noyes Data Corporation, Park Ridge N.J. 1976, may be mentioned herein.

The antistatic agents for use in the process according to the present invention are ethylene oxide/propylene oxide block copolymers with a content of ethylene oxide of from 10 to 50% by weight and an average molecular weight of from 1000 to 5000, known, e.g., under the trade name GLENDION^{®}.

The amount of antistatic agent does not exceed 1% by weight relative to the polymer and usually ranges from 0.001 to 0.5 and preferably from 0.01 to 0.1% by weight, with respect to the polymer.

The polymer particles can be coated with the antistatic agent by any mixing methods, as known from the prior art; for example, the foamable particles can be treated with the proper amount of antistatic agent in a revolving drum or in a tumbler.

Coating the particles with the antistatic agent facilitates the (preferred) subsequent sieving operation, which allows various fractions to be obtained, each of which has a controlled size range, and is intended for a different use.

Prior to being subjected to moulding, the particles are generally pre-foamed by means of steam of hot air, at temperatures higher than the particles' glass transition temperature, and then aged at room temperature, usually for 10 to 30 hours, according to techniques known from the prior art.

The foamable particles obtained by means of the process according to the instant invention display the following characteristics:
(a) a short required residence time inside the mould, generally equal to or even lower than 50% of the time necessary for cooling the blocks or shaped articles prepared from pre-foamed particles not treated according to the process of the present invention;
(b) a deformation of the block, in thickness (vertical) direction, of ≤ 1%;
(c) a high degree of sintering, so as to allow the moulding to be carried out with the addition of substantial amounts of recycled scrap foamed products;
(d) short ageing times after pre-foaming; and
(e) a high absorbing power for pigments and/or other additives on their surfaces.

In addition to the foaming agents, the styrene polymers can also contain further additives, such as, e.g., flame retardants, organic and inorganic fillers, dyes, pigments, antistatic agents, anti-caking agents to prevent clumps from being formed during the pre-foaming step, plasticizers and other compounds.

The polymerization of styrene, preferably in aqueous suspension, the addition of the foaming agent, preferably during the polymerization step, and the transformation of the particles into shaped articles by moulding inside closed moulds, may be accomplished by means of techniques which are well-known to those skilled in the art, and are extensively described in the technical literature such as, e.g., in "Rigid Plastic Foams" by T.N. Ferrigno, Reinhold Publishing Corp., New York, U.S.A. (1963).

The following examples are to further illustrate the present invention but in no way are to be construed as being limitative of the scope thereof.

### EXAMPLE 1

20 kg of particles of a polystyrene having a weight average molecular weight of 180,000, a size range of from 0.2 to 2.7 mm and containing, incorporated therein, a foaming agent composed of a mixture of n-pentane and iso-pentane (ratio 70:30 by weight), were obtained by polymerizing styrene in aqueous suspension, at a temperature of from 85 to 120°C and in the presence of dibenzoyl peroxide and tert-butyl peroxide as catalysts.

The particles discharged from the polymerization reactor were washed with water, centrifuged and dried at 20°C for 1 hour.

The foamable particles were admixed with 300 ppm of an antistatic agent composed of a block copolymer of ethylene oxide and propylene oxide (10:90 by weight) having an average molecular weight of from 2,000 to 3,000, known on the market under the trade name GLENDION® FG.

The mixing was performed in a tumbler at room temperature for about 10 minutes. The particles were then sieved and two fractions thereof were separated, of which the fraction
(A) was constituted by particles having a diameter of from 0.4 to 0.9 mm, and the other fraction
(B) was constituted by particles having a diameter of from 0.9 to 2.7 mm.

The content of foaming agent was 6.8% by weight in fraction (A), and 6.9% by weight in fraction (B).

Each fraction was then subdivided into two equal portions, i.e., "A.1" and "A.2"; and "B.1" and "B.2", respectively.

Fraction A.2 was charged into an oven, heated up to about 35°C, and the content of foaming agent therein was measured at time intervals of 10 minutes. When the foaming agent content had reached 5% by weight, the sample was removed from the oven and was rapidly cooled, in order to stop the loss of foaming agent.

Each of the fractions A.1 and A.2 was admixed with a conventional coating blend consisting of 0.2% by weight, relative to the weight of the polymer, of glyceryl monostearate and 0.05% by weight of zinc stearate, and then was pre-foamed with steam at 95 to 100°C to a density of about 25 g/l. Each fraction was allowed to age in air, at room temperature for 24 hours, and subsequently was moulded in order to transform it into packaging containers (40 cm x 60 cm x 2 cm). The moulding was carried out with steam at 0,91 bar (0.9 atm). The cooling time of the containers, defined as the residence time inside the mould necessary for each shaped article to retain the dimensions of the mould after having been extracted from said mould, was measured.

The containers obtained from fraction A.2 showed a cooling time (2 minutes 45 seconds), which was about 50% shorter than the cooling time of containers obtained from fraction A.1 (5 minutes).

On each container the sintering degree, defined as the percentage of foamed particles which were broken following the breakage of the bottom of the container, was determined.

The sinterization percentage was determined by defining a breakage section of approximately 10 cm² of surface area, counting the total number of foamed particles contained in that section and calculating the number of broken particles referred to the total number of particles.

By means of this measurement, it was determined that the containers from fraction A.2 had a sinterization degree of 80%, whilst those from fraction A.1 had a sinterization degree of 15%.

Fraction B.2 was treated as described for fraction A.2. When the content of foaming agent was 5.1%, the sample was removed from the oven, and rapidly cooled in order to stop the loss of foaming agent.

Each of the fractions B.1 and B.2 was admixed with the same coating agent as used with fractions A.1 and A.2, was pre-foamed to a density of about 20 g/l, and was allowed to age, at room temperature for 24 hours, as described above for fractions A.1 and A.2.

Each fraction was subsequently moulded in order to obtain blocks (100 cm x 100 cm x 50 cm). The moulding was carried out by means of steam at 0,66 bar (0.65 atm).

The residence time (9 minutes) inside the mould of the block obtained from fraction B.2 was 55% shorter than the residence time (20 minutes) of the block obtained from fraction B.1.

The deformations in vertical direction of the block from fraction B.2 were 75% smaller than those of the block from fraction B.1 (5 mm vs. 20 mm).

The sinterization degree of a sheet of 5 cm of thickness, cut from the block from fraction B.2, was considerably higher than that of the corresponding sheet, having the same thickness, cut from the block from fraction B.1 (50% vs. 5%).

From the above blocks, sheets were cut which had a thickness of 1.5 mm. When said sheets were examined against a dark background, the sheets from the block made from fraction B.2 showed a complete absence of crevices between the sintered particles, which were observed, on the contrary, in the sheet from the block obtained from fraction cut B.1.

### EXAMPLE 2

Both fractions A.1 and A.2 of Example 1 were treated under the same operating conditions as in example 1, except for the ageing time, which was only 5 hours.

The residence time inside the mould of the container obtained from fraction A.1 was longer than 10 minutes and the containers, after having been removed from the mould, were very much deformed. The residence time inside the mould of the container obtained from fraction A.2 was only 20% longer than that of example 1, which had been allowed to age for 24 hours; furthermore, the de-moulded containers were not deformed.

### EXAMPLE 3

Fractions B.1 and B.2 obtained in example 1, after a 24-hour ageing, were admixed with 25% by weight of foamed polystyrene recovered from waste material, obtained by grinding scrapped articles.

Each fraction was moulded under the conditions given in example 1.

The sinterization degree of the block from fraction B.2 was considerably higher than that of the block from fraction B.1 (40% vs. 0%).

Furthermore, when visually examined against a dark background, a sheet of 1.5 mm of thickness cut by means of a hot wire from the block from fraction B.2, showed an essential absence of crevices between the sintered particles.

A similar sheet obtained by cutting from the block obtained from fraction B.1 was uneven, with large-size crevices and quite evident deposits of condensed water.

### EXAMPLE 4

By operating according to the procedure described in example 1, two samples "C.1" and "C.2" were prepared, which had the same characteristics as samples A.1 and A.2 of example 1, respectively.

Each sample was admixed with 0.1% by weight of carbon black, and then with a conventional coating composition for moulding composed of 0.2% by weight, relative to the polymer, of glyceryl monostearate and 0.05% by weight of zinc stearate.

The mixing was carried out in a tumbler at room temperature.

Each sample was then pre-foamed, allowed to age and moulded under the operating conditions described in example 1.

Sample C.2 had a uniformly pigmented surface with no release of carbon black; in contrast thereto, sample C.1 had an uneven carbon black distribution and underwent a pigment loss over time.

Furthermore, the sinterization degree of the article obtained from sample C.2 was considerably higher than that of the article made from sample C.1 (25% vs. 0%).

## Claims

1. Process for producing improved foamable particles of styrene homopolymers and copolymers of styrene and other vinylic and/or vinylidenic monomers containing at least 50% by weight of chemically combined styrene (styrenic polymers), said process comprising:
(i) providing foamable particles of styrenic polymers containing incorporated therein from 2 to 20% by weight of foaming agent;
(ii) coating said particles with antistatic agent in an amount of not more than 1% by weight, based on the polymer, said antistatic agent consisting of an ethylene oxide/propylene oxide block copolymer with a content of ethylene oxide of from 10 to 50% by weight and an average molecular weight of from 1000 to 5000;
(iii) removing, before the pre-foaming, 5 to 60% by weight of the foaming agent initially present by treating the particles in an oven and at a temperature lower than the glass transition temperature of said particles.

2. Process according to claim 1, in which the removal of foaming agent is from 5 to 50% by weight, relative to the initial content of said foaming agent.

3. Process according to any one of the preceding claims, in which the removal of foaming agent is carried out at a temperature of from 25 to 60°C, preferably of from 35 to 50°C, and for 10 minutes to 24 hours.

4. Process according to any one of the preceding claims, in which the foaming agent is selected from aliphatic C₂-C₆ hydrocarbons and mixtures thereof, particularly propane, butane, n-pentane, isopentane, hexane and cyclohexane; petroleum ether; and halogenated derivatives of aliphatic C₁-C₃ hydrocarbons, particularly chloro- and fluoro-derivatives of methane, ethane and/or ethylene.

5. Process according to any one of the preceding claims, in which the foaming agent is initially present in amounts of from 4 to 10% by weight, relative to the weight of the polymer.

6. Process according to any one of claims 1 to 5, in which the amount of antistatic agent ranges from 0.001 to 0.5, particularly from 0.01 to 0.1% by weight, relative to the weight of the polymer.

7. Process according to any one of the preceding claims, in which the foamable particles are subjected to sieving prior to the partial removal of the foaming agent.

8. Foamable particles of styrenic polymers, obtainable according to the process of any one of the preceding claims.

9. Use of the foamed particles according to claim 8 for the production of moulded articles.

## Patentansprüche

1. Verfahren zur Herstellung verbesserter schäumbarer Teilchen aus Styrol-Homopolymeren und Copolymeren von Styrol und anderen Vinyl- und/oder Vinyliden-Monomeren, die mindestens 50 Gewichts-% chemisch gebundenes Styrol enthalten (styrolische Polymere), wobei das Verfahren umfaßt:
(i) das Bereitstellen schäumbarer Teilchen aus styrolischen Polymeren, welche darin einverleibt 2 bis 20 Gewichts-% Treibmittel enthalten;
(ii) das Überziehen der Teilchen mit antistatischem Mittel in einer Menge von nicht mehr als 1 Gewichts-%, bezogen auf das Polymer, wobei das antistatische Mittel aus einem Ethylenoxid/Propylenoxid-Blockcopolymer mit einem Gehalt an Ethylenoxid von 10 bis 50 Gewichts-% und einem durchschnittlichen Molekulargewicht von 1000 bis 5000 besteht;
(iii) das Entfernen vor dem Vorschäumen von 5 bis 60 Gewichts-% des Treibmittels, das ursprünglich anwesend war, durch Behandeln der Teilchen in einem Ofen und bei einer Temperatur, die niedriger ist als die Glasübergangstemperatur der Teilchen.

2. Verfahren nach Anspruch 1, in welchem die Entfernung von Treibmittel 5 bis 50 Gewichts-% ist, relativ zu dem anfänglichen Gehalt des Treibmittels.

3. Verfahren nach irgendeinem der vorangehenden Ansprüche, in welchem die Entfernung von Treibmittel bei einer Temperatur von 25 bis 60°C, vorzugsweise von 35 bis 50°C, und während 10 Minuten bis 24 Stunden durchgeführt wird.

4. Verfahren nach irgendeinem der vorangehenden Ansprüche, in welchem das Treibmittel aus aliphatischen (C₂-C₆)-Kohlenwasserstoffen und deren Mischungen, insbesondere Propan, Butan, n-Pentan, Isopentan, Hexan und Cyclohexan; Petrolether; und halogenierten Derivaten von aliphatischen (C₁-C₃)-Kohlenwasserstoffen, insbesondere Chlor- und Fluor-Derivaten von Methan, Ethan und/oder Ethylen, ausgewählt ist.

5. Verfahren nach irgendeinem der vorangehenden Ansprüche, in welchem das Treibmittel anfänglich in Mengen von 4 bis 10 Gewichts-%, relativ zum Gewicht des Polymers, anwesend ist.

6. Verfahren nach irgendeinem der Ansprüche 1 bis 5, in welchem die Menge an antistatischem Mittel im Bereich von 0,001 bis 0,5, insbesondere von 0,01 bis 0,1 Gewichts-%, relativ zum Gewicht des Polymers, vorliegt.

7. Verfahren nach irgendeinem der vorangehenden Ansprüche, in welchem die schäumbaren Teilchen vor der teilweisen Entfernung des Treibmittels einem Sieben unterzogen werden.

8. Schäumbare Teilchen aus styrolischen Polymeren, erhältlich nach dem Verfahren von irgendeinem der vorangehenden Ansprüche.

9. Verwendung der geschäumten Teilchen nach Anspruch 8 bei der Herstellung von Formkörpern.

## Revendications

1. Procédé pour produire des particules expansibles améliorées d'homopolymères de styrène et de copolymères de styrène et d'autres monomères vinyliques et/ou vinylidéniques contenant au moins 50 % en poids de styrène chimiquement combiné (polymères styréniques), ledit procédé comprenant :
(i) le fait de fournir des particules expansibles de polymères styréniques contenant de 2 à 20 % en poids d'agent d'expansion incorporé dedans ;
(ii) le fait de revêtir lesdites particules avec un agent antistatique en une quantité ne dépassant pas 1 % en poids par rapport au polymère, ledit agent antistatique étant constitué d'un copolymère séquencé d'oxyde d'éthylène/oxyde de propylène dont la teneur en oxyde d'éthylène va de 10 à 50 % en poids et dont la masse moléculaire moyenne va de 1000 à 5000 ;
(iii) le fait d'éliminer, avant une expansion préliminaire, 5 à 60 % en poids de l'agent d'expansion initialement présent en traitant les particules dans une étuve et à une température inférieure à la température de transition vitreuse desdites particules.

2. Procédé selon la revendication 1, dans lequel on élimine de 5 à 50 % en poids de l'agent d'expansion par rapport à la teneur initiale en agent d'expansion.

3. Procédé selon l'une quelconque des précédentes revendications, dans lequel on effectue l'élimination de l'agent d'expansion à une température allant de 25 à 60 °C, de préférence allant de 35 à 50 °C, et pendant 10 minutes jusqu'à 24 heures.

4. Procédé selon l'une quelconque des précédentes revendications, dans lequel l'agent d'expansion est choisi parmi des hydrocarbures aliphatiques en C₂-C₆ et leurs mélanges, en particulier le propane, le butane, le n-pentane, l'isopentane, l'hexane et le cyclohexane ; l'éther de pétrole ; et des dérivés halogénés d'hydrocarbures aliphatiques en C₁-C₃, en particulier les dérivés chlorés et fluorés du méthane, de l'éthane et/ou de l'éthylène.

5. Procédé selon l'une quelconque des précédentes revendications, dans lequel l'agent d'expansion est initialement présent en une quantité allant de 4 à 10 % en poids par rapport au poids du polymère.

6. Procédé selon l'une quelconque des revendications 1 à 5, dans lequel la quantité d'agent antistatique se situe dans l'intervalle allant de 0,001 à 0,5, en particulier de 0,01 à 0,1 % en poids par rapport au poids du polymère.

7. Procédé selon l'une quelconque des précédentes revendications, dans lequel les particules expansibles sont soumises à un tamisage avant l'élimination partielle de l'agent d'expansion.

8. Particules expansibles de polymères styréniques, pouvant être obtenues selon le procédé de l'une quelconque des précédentes revendications.

9. Utilisation de particules expansées selon la revendication 8 pour la production d'articles moulés.
